(19) **Europäisches Patentamt**

**European Patent Office**

**Office européen des brevets**

(11) Veröffentlichungsnummer: **0 194 606**
**B1**

(12) **EUROPÄISCHE PATENTSCHRIFT**

(45) Veröffentlichungstag der Patentschrift:
14.06.89

(51) Int. Cl.⁴: **C 03 B 37/06,** C 03 B 37/08

(21) Anmeldenummer: **86103051.8**

(22) Anmeldetag: **07.03.86**

(54) Verfahren und Einrichtung zur Herstellung von Mineralfasern aus silikatischen Rohstoffen.

(30) Priorität: **15.03.85  DE 3509426**

(43) Veröffentlichungstag der Anmeldung:
**17.09.86 Patentblatt 86/38**

(45) Bekanntmachung des Hinweises auf die Patenterteilung:
**14.06.89 Patentblatt 89/24**

(84) Benannte Vertragsstaaten:
**BE DE FR IT LU NL**

(56) Entgegenhaltungen:
**EP-A- 0 013 237**
**EP-A- 0 119 429**
**US-A- 4 316 731**

**Ullmanns Encyklopädie der technischen Chemie, 4.**
**Auflage, Band 11, Seiten 364, 365, 367**

(73) Patentinhaber: **Grünzweig + Hartmann**
**Aktiengesellschaft,**
**Bürgermeister-Grünzweig-Strasse 1-47,**
**D-6700 Ludwigshafen am Rhein (DE)**

(72) Erfinder: **Fachat, Gaston, Im Steg 43, D-6802 Ladenburg**
**(DE)**
Erfinder: **Sistermann, Klaus, In der Almel 37,**
**D-6730 Neustadt (DE)**
Erfinder: **Ungerer, Heinz-Jürgen, Bensheimer**
**Strasse 39, D-6806 Viernheim (DE)**

(74) Vertreter: **Kuhnen, Wacker & Partner,**
**Schneggstrasse 3-5 Postfach 1553, D-8050 Freising (DE)**

## Beschreibung

Verfahren und Einrichtung zur Herstellung von Mineralfasern aus silikatischen Rohstoffen nach dem Düsenblasverfahren

Die Erfindung betrifft ein Verfahren zur Herstellung von Mineralfasern aus silikatischen Rohstoffen nach dem Düsenblasverfahren, gemäss dem Oberbegriff des Patentanspruches 1, und eine Einrichtung zur Durchführung dieses Verfahrens, gemäss dem Oberbegriff des Patentanspruchs 2.

Unter dem Begriff «molarer Viskositätsmodul», der in der Glasindustrie üblich ist, wird der dimensionslose Quotient aus folgenden üblichen Bestandteilen eines silikatischen Rohstoffes verstanden:

$$m = \frac{SiO_2 + 2Al_2O_3}{TiO_2 + 2Fe_2O_3 + CaO + MgO + Na_2O + K_2O}$$

wobei die Bestandteile in Molen einzusetzen sind.

Bei der Zerfaserung von Schmelze zur Erzeugung anorganischer Fasern für Dämmzwecke besteht in aller Regel das Bestreben, besonders feine und lange Mineralfasern zu erhalten, die möglichst wenig unverzogene Reste, sogenannte Perlen, enthalten. Hierzu bildet man beim Düsenblasverfahren den einen Zerfaserungskanal bildenden Spalt zwischen den beiden Blasdüsenhälften so schmal aus, wie dies zur Erzielung des erforderlichen Strömungsprofils im Kanal zum Ausziehen und Verziehen der Fasern noch eben möglich ist. Es hat sich gezeigt, dass eine Verbreiterung des Spaltes, etwa bei Arbeit mit dickeren Primärfäden zur Erhöhung des Ausstosses, schnell zu einer Vergrösserung des Perlenanteils führt, was vermutlich auf einen unkontrollierten Druckanstieg im Bereich des Auslasses der Blasdüsenanordnung zurückzuführen ist. Weiterhin hat sich gezeigt, dass sich bei hoher Temperatur (um 1400 ° C) des Primärfadens an den Austrittsöffnungen der Verteilerwanne bevorzugt kurze, aber feine Fäden mit einer Dicke von wenigen um ergeben, während bei niedrigerer Temperatur (um 1330 °C) eher längere und dickere Fäden erhalten werden, wobei jedoch der Gehalt an Perlen deutlich ansteigt. Weiterhin sinkt der Ausstoss zwangsläufig durch die infolge erhöhter Viskosität verminderte Ausflussgeschwindigkeit der Schmelze aus den Austrittsöffnungen ab, wenn die Schmelztemperatur vermindert wird.

Während für die meisten Anwendungsfälle ohnehin die Erzeugung möglichst feiner Wolle angestrebt wird, die bei hohem Ausstoss in der Regel relativ perlenfrei erzielt werden kann, gibt es jedoch auch Anwendungsfälle, bei denen dickere Fäden grösserer Länge erwünscht sind, sofern diese weitgehend perlenfrei und mit hoher Produktivität erhalten werden können. Ein solcher Anwendungsfall ist beispielsweise die Herstellung von Einsatzkörpern für Abgasschalldämpfer wie Kfz-Auspufftöpfe, bei denen ein gutes Ausblasverhalten der Wolle zentrale Bedeutung besitzt. Da der Zerfaserungsprozess beim Düsenblasverfahren von einer Vielzahl von Einflussgrössen beherrscht wird, die in schwer durchschaubarer Weise zusammenwirken, wirft eine Umstellung der Produktion zur Erzeugung von Fasern etwa für Schalldämpfer erhebliche Probleme auf und gelingt nicht mit zufriedenstellender Qualität oder Produktivität. Das Düsenblasverfahren ist im allgemeinen in Ullmanns Enzyklopädie der technischen Chemie, vierter Auflage Band 11 auf der Seite 367 beschrieben.

Demgegenüber liegt der Erfindung die Aufgabe zugrunde, ein Verfahren und eine Einrichtung zur Herstellung von Mineralfasern zu schaffen, welche bei hoher Produktivität, also hohem Ausstoss, eine weitgehende perlenfreie Erzeugung langer und relativ dicker Fasern mit einer Dicke von gegebenenfalls weit über 10 μm zulässt.

Die Lösung dieser Aufgabe gelingt durch die kennzeichnenden Merkmale der Patentansprüche 1 und 2.

Hierdurch wird zunächst der Austrittsquerschnitt der Austrittsöffnung der Verteilerwanne, der üblicherweise etwa 2 mm² beträgt, entsprechend einem Durchmesser von etwa 1,5 mm bei kreisrunder Austrittsöffnung, deutlich vergrössert, so dass sich auch bei hoher Viskosität der Schmelze ein dicker Primärfaden als erste Voraussetzung für hohen Ausstoss ergibt. Eine solche hohe Viskosität liegt bei dem zu verwendenden Rohstoff mit einem für das Düsenblasverfahren unüblich hohen molaren Viskositätsmodul von wenigstens 1,5 vor. Durch die weiter vorgenommene Vergrösserung des Vertikalabstandes zwischen den Austrittsöffnungen der Verteilerwanne und den Einblasschlitzen für Treibgas, in der Regel Luft, ergibt sich ein vergleichsweise langer Weg, auf dem der dicke Primärfaden der Kühlwirkung und der Vorzieh-Reibung des Sekundärluftstromes ausgesetzt ist, der nach Art eines Injektors durch den Treibgasstrahl zusammen mit dem Primärfaden von oben her in den Düsenspalt eingezogen wird. Während die Kühlwirkung voll zur Geltung kommt, wird die Vorzieh-Reibung des Sekundär-Luftstromes im Hinblick auf die grosse Bemessung der Breite des Düsenspaltes nur vermindert wirksam, so dass das Material des Primärfadens die Höhe der Einblasschlitze bereits relativ kalt, aber noch in vergleichsweise dickem Faden erreicht.

Als weitere Massnahme kann daran gedacht werden, auch das Treibgas gekühlt in den Düsenspalt einzuleiten. In jedem Falle kann mit vergleichsweise hoher Treibgasmenge bei geringem Blasdruck entsprechend einem Vorlagedruck von unter 3 bar gearbeitet werden, so dass mit einer möglichst grossen Menge Treibgas die Zerfaserung eingeleitet wird, die in der an sich bekannten Weise infolge des sich im Düsenspalt einstellenden Geschwindigkeitsprofils eine seitliche Auslenkung des Primärfadens und Aufspaltung in Einzelfäden ergibt, die sodann durch Schleifenbildung weiter ausgezogen werden. Diesen Einwirkungen der Strömungen im Düsenspalt ist die Schmelze im Hinblick auf die grosse vertikale Länge des Düsenspaltes über eine entsprechende lange Wegstrecke hinweg ausgesetzt, so dass trotz relativ starker Vorkühlung und sozusagen «kalter Zerfaserung» dicke Fasern mit einem Durchmesser von 10 μm oder mehr gebildet werden. Es hat sich dabei überraschend gezeigt, dass eine Perlenbildung in wesentlichem Umfang, wie an sich im Hinblick auf die grosse Breite des Spaltes zu befürchten gewesen wäre, nicht auftritt, da infolge der relativ niedrigen Treibgasgeschwindigkeit problemlos mit so grossen Treibgasmengen gearbeitet werden kann, dass ein einwandfreier Austrag der Strömung aus dem Austrittsende des Düsenspaltes ohne unkontrollierte Druckstösse gewährleistet werden kann.

In Anspruch 2 ist eine zur Durchführung des erfindungsgemässen Verfahrens geeignete Einrichtung angegeben. In besonders bevorzugter Ausgestaltung ist gemäss Anspruch vorgesehen, dass Luftleitlippen der Einblasschlitze den Düsenspalt lokal deutlich verengen. Hierdurch ergibt sich in Höhe der Einblasschlitze ein ausgeprägter Drucksprung, der den dicken, relativ kalten Primärfaden trotz seiner geringen Viskosität und grossen Dicke explosionsartig in Einzelfäden aufzuteilen scheint, die dann auf den relativ langen verbleibenden Wegstrecke im Düsenspalt im gewünschten Umfange perlenfrei verzogen werden können. Die Verwendung von Luftleitlippen bzw. sonstiger innerer Begrenzungen des Einblasspaltes zur Bildung einer ausgeprägten lokalen Querschnittverengung steht im Widerspruch zur üblichen Vorgehensweise, wonach versucht wird, die Beeinflussung der Strömung durch die Einblasschlitze so gering als nur irgend möglich zu halten; hierzu hat man sogar die Einblasschlitze schon gänzlich aus dem Bereich des Düsenspaltes herausverlegt, um das Treibgas ohne irgendeine mechanische Störung im Düsenspalt alleine durch Ausnutzung des Coanda-Wandeffektes zuführen zu können (vgl. z.B. DE-C-11 90 135).

Weitere Einzelheiten, Merkmale und Vorteile der Erfindung ergeben sich aus der nachfolgenden Beschreibung einer Ausführungsform anhand der Zeichnung:

Es zeigt

Fig. 1 eine erfindungsgemässe Einrichtung in einer schematischen Stirnansicht.

Fig. 2 die Einrichtung gemäss Fig. 1 in einer Seitenansicht und

Fig. 3 die Einzelheit aus Kreis III in Fig. 2 in natürlicher Grösse.

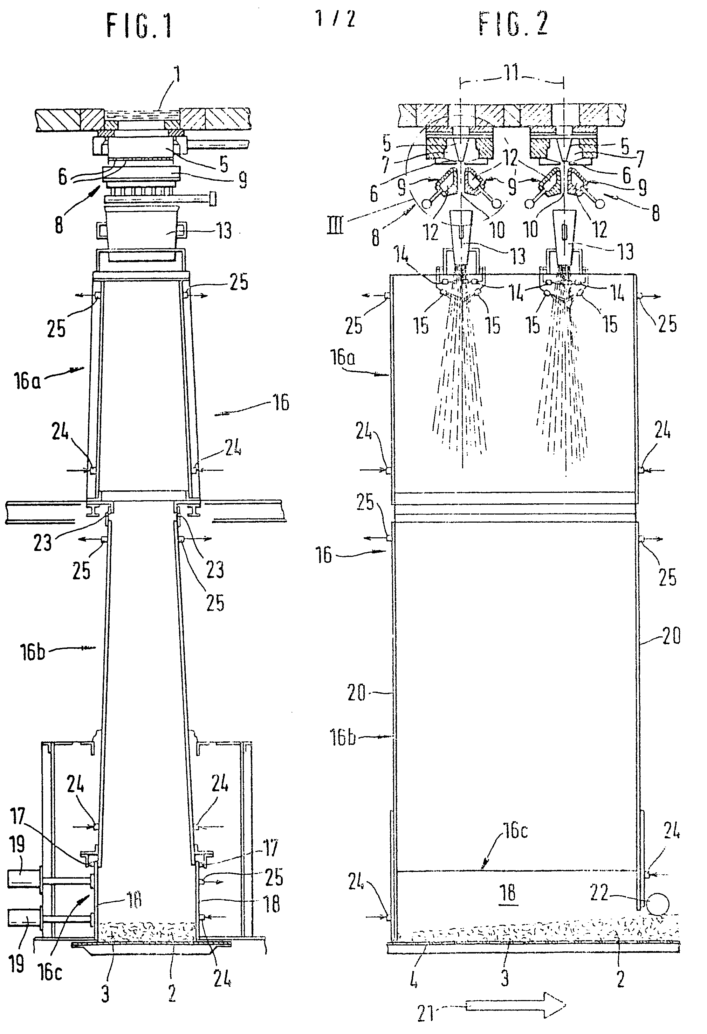

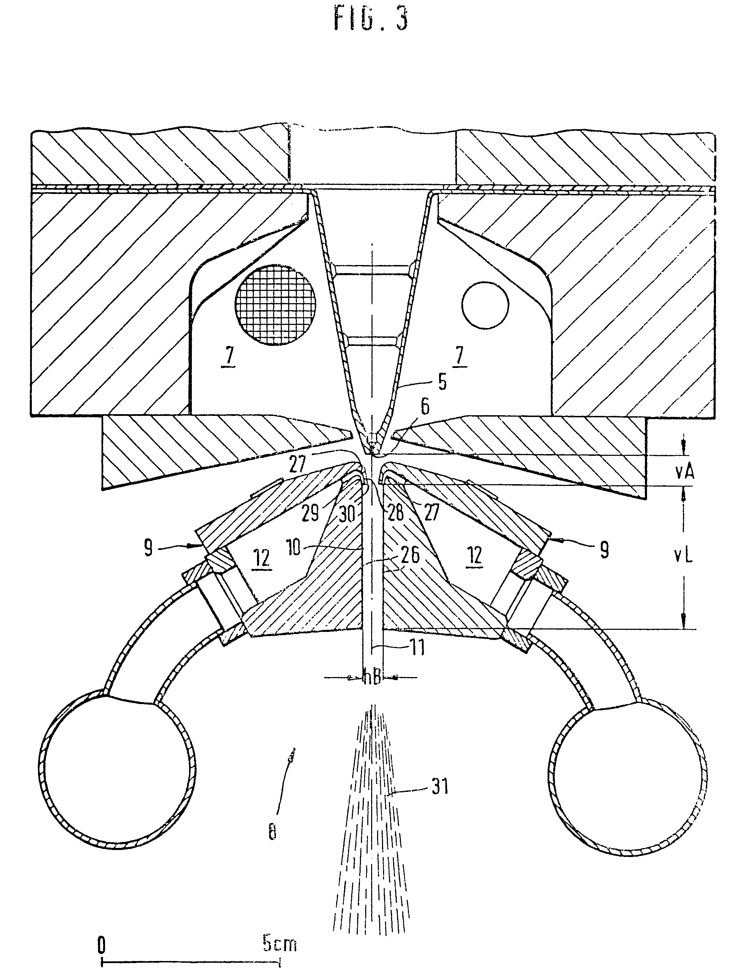

Wie die Fig. 1 und 2 veranschaulichen, dient eine erfindungsgemässe Einrichtung dazu, eine mit 1 bezeichnete mineralische Schmelze im Kopfbereich der Einrichtung in Mineralfasern umzuwandeln, die zur Bildung einer kontinuierlichen Mineralfaser-Bahn 2 auf einem Förderband 3 abgelegt und – in der Darstellung gemäss Fig. 2 nach rechts – weggefördert werden. Das Förderband 3 ist, wie in Fig. 2 angedeutet ist, mit Perforationen 4 versehen, durch welche hindurch in nicht näher veranschaulichter Weise Luft bzw. Gas nach unten abgesaugt werden kann, wie dies bei der Mineralfaserherstellung an sich üblich ist.

Die Schmelze 1 aus einer nicht näher dargestellten Schmelzwanne wird im Beispielsfalle zwei nebeneinander angeordneten Verteilerwannen 5 zugeführt, die je eine Reihe von Austrittsöffnungen 6 für Schmelze besitzen. Die Verteilerwannen 5 sind in der üblichen und bekannten Weise aus Platin gefertigt und werden durch Flammen in seitlichen Hohlräumen 7 auf einer gewünschten Temperatur gehalten.

Unterhalb der Austrittsöffnungen 6 sind, wie beim Düsenblasverfahren im Prinzip ebenfalls üblich ist, Blasdüseneinrichtungen 8 angeordnet, die aus je zwei Blasdüsenhälften 9 und einem dazwischen angeordneten Düsenspalt 10 bestehen, durch welche hindurch aus den Austrittsöffnungen 6 austretende Primärfäden der Schmelze entsprechend des auf Fig. 2 ersichtlichen Fallinien 11 treten und dabei durch Treibgas zerfasert werden, welches mit Überdruck in Hohlräumen 12 der Blasdüsenhälften bereitgestellt und über in den Fig. 1 und 2 nicht sichtbare Einblasschlitze in den Düsenspalt 10 eingeblasen wird. Die dabei prinzipiell ablaufenden Vorgänge sind dem Fachmann geläufig.

An der in der Zeichnung unteren Austrittsseite der Blasdüseneinrichtungen 8 tritt ein Strömungsbündel 31 (vgl. Fig. 3) aus, das Treibgas, durch die Injektorwirkung des eingeblasenen Treibgases von der Oberseite der Blasdüseneinrichtung 8 her angesaugte Sekundärluft zusammen mit Verbrennungsabgasen aus den Hohlräumen 7 und die soeben gebildeten Fasern bei noch hoher Temperatur enthält. Das Strömungsbündel 31 gelangt in düsenartig konvergierende Leitschächte 13, wodurch an deren Oberseite nochmals Sekundärluft zur weiteren Abkühlung angesaugt wird, und das so gebildete Faser-Gasgemisch am Austritt der Leitschächte 13 unter erneuter Bündelung wiederum in einem Strömungsbündel austritt. Aufgrund der langgestreckten Form der Düsenspalte 10 und Leitschächte 13 sind die Strömungsbündel natürlich entsprechend langgestreckt ausgebildet und wirken lediglich in einer Fig. 2 oder 3 entsprechenden Ansicht wie schlanke Kreiskegel. Im Bereich des unteren Endes der Leitschächte 13 sind Sprühdüsen 14 zum Eindüsen von Kühlflüssigkeit wie Kühlwasser und Sprühdüsen 15 zum Eindüsen von Bindemittel wie Phenolharz in fliessfähiger Konsistenz angeordnet. Dies ist zugleich der Eintrittsbereich eines insgesamt mit 16 bezeichneten Fallschachtes, der übereinander angeordnet einen ersten Schachtabschnitt 16a, einen zweiten Schachtabschnitt 16b und einen dritten Schachtabschnitt 16c aufweist. Im Inneren des Fallschachtes 16 kühlen die herabfallenden Fasern weiter ab und verteilen sich über den Querschnitt des Fallschachtes, so dass sich auf dem Förderband 3 eine gleichmässige Ablage als Bahn 2 ergibt, wobei die mitgeführte und mit in den Fallschacht 16 eingeführte Gase in der weiter oben bereits angedeuteten, bekannten Weise abgesaugt werden.

Der untere Schachtabschnitt 16c des Fallschachtes 16 weist bewegliche Seitenwände 18 auf, die beispielsweise über Stellglieder 19 in ihrer Lage durch Parallelverschiebung einstellbar sind und durch Mitnehmer 17 mit den angrenzenden Wänden des mittleren Schachtabschnittes 16b verbunden sind sowie, wie aus Fig. 1 deutlich wird, die seitlichen Ränder der Bahn begrenzen. Wie aus der im Bereich des Fallschachtes 16 aufgeschnittenen Darstellung der Zeichnung hervorgeht, reichen die Stirnwände 20 des mittleren Schachtabschnittes 16b bis in den Bereich des unteren Schachtabschnittes 16c und bilden somit auch dessen Stirnwände. Die Stirnwände 20 des gesamten Fallschachtes 16 sind starr angeordnet, wobei die in Wegfödderrichtung gemäss Pfeil 21 hintere Stirnwand entsprechend der Höhe der Mineralfaser-Bahn 2 verkürzt ist, so dass die Mineralfaser-Bahn 2 aus dem Bereich des Fallschachtes 16 auslaufen kann, wobei beim Auslauf sogleich eine Druckbeaufschlagung und Höhenegalisierung durch eine ebenfalls gekühlte Walze 22 erfolgt.

Zwar sind somit einige der Umfangswände des Fallschachtes 16 beweglich, wie etwa die Seitenwände 18 des untersten Schachtabschnittes 16c durch Parallelverschiebung und bei Bedarf auch die Seitenwände des mittleren Schachtabschnittes 16b durch Schwenkbewegung um Scharniere 23, jedoch sind sämtliche Umfangswände als solche starr ausgebildet, besitzen also keine Bewegungsmöglichkeit für eine ständige Selbstreinigung oder dergleichen. Dafür aber sind sämtliche Umfangswände des Fallschachtes 16 doppelwandig ausgebildet und in den so gebildeten Hohlräumen von Kühlflüssigkeit durchströmt, die jeweils durch Anschlüsse 24 zuführbar und durch Anschlüsse 25 abführbar ist.

Der Bereich der Blasdüseneinrichtung 8 ist in Fig. 3 mit weitern Einzelheiten veranschaulicht, wobei Fig. 3, wie der dargestellte Massstab erkennen lässt, diesen Teil der erfindungsgemässen Einrichtung in natürlicher Grösse wiedergibt.

Der grundsätzliche Aufbau der Blasdüseneinrichtung 8 sowie der Verteilerwanne 5 mit den Austrittsöffnungen 6 ist bereits weiter oben erläutert worden. Wie sich aus der grösseren Darstellung in Fig. 3 ergibt, weist der Düsenspalt 10 parallele Wände 26 auf, deren oberes Ende eine Rundung 27 besitzt. Die Rundung 27 wird von einer Luftleitlippe 28 übergriffen, die zur benachbarten Spaltwand 26 hin einen Einblasschlitz 29 frei lässt, dessen rückwärtiges Ende mit einem zugeordnetem Hohlraum 12 für Druckluft bzw. Druckgas in Verbindung steht. Auf diese Weise wird ein Geschwindigkeitsprofil mit hoher Geschwindigkeit im Bereich der Spaltwände 26 und geringerer Geschwindigkeit im Mittelbereich des Düsenspaltes 10 erzeugt. Dessen Wechselwirkung mit der Schmelze ergibt die erforderliche Schleifenbildung für die Zerfaserung, wie dies an sich bekannt ist.

Der Austrittsquerschnitt der Austrittsöffnung 6 der Verteilerwanne 5 möge im Beispielsfalle 3,1 mm² betragen, was gegenüber üblichen Austrittsquerschnitten ein sehr hoher Wert ist. Hierdurch kann Schmelze aus der Verteilerwanne 5 selbst bei relativ niedriger Temperatur um 1330°C und demzufolge niedriger Viskosität in ausreichender Menge ausströmen und der Zerfaserung ausgesetzt werden. Der Vertikalabstand vA zwischen den Austrittsöffnungen 6 und den auf gleicher Höhe liegenden Einblasschlitzen 29 beträgt 11 mm und ist demzufolge ebenfalls unüblich hoch gewählt. Hierdurch wird eine weitere Abkühlung des Primärfadens bis zur Zerfaserung in Höhe der Einblasschlitze 29 erzielt. Die horizontale Breite hB des Düsenspaltes 10 liegt im Beispielsfalle bei 12 mm, also einem ebenfalls sehr hohen Wert, was zunächst zur Folge hat, dass die zusammen mit dem Primärfaden eingesaugte Sekundärströmung den Primärfaden zwar wirksam weiter kühlt, jedoch nur geringfügig vorverzieht, da hierfür deren Strömungsgeschwindigkeit zu gering bleibt. Somit gelang ein relativ dicker, jedoch relativ kalter Primärfaden in den Bereich der Einblasschlitze 27. Dort ragen die Luftleitlippen unter Verengung der Spaltbreite hB des Düsenspaltes in den freien Spaltquerschnitt hinein und enden bevorzugt mit einer relativ scharfen Aussenkante 30, so dass sich eine akzentuierte Strömungsänderung mit Drucksprung ergibt.

Dieser Drucksprung unterstützt nachhaltig das sofortige Aufreissen des kompakten, kalten Primärfadens im Sinne einer «kalten Zerfaserung», wonach entsprechend der Länge des anschliessenden Düsenspaltes vL eine wiederum unüblich grosse Länge von im Beispielsfalle 40 mm für eine vollständige Zerfaserung zur Verfügung steht. Mit Rücksicht auf die gute Vorkühlung kommt es trotz der langen Zerfaserungsstrecke kaum zur Perlenbildung. Weiterhin kann mit relativ geringer Luftgeschwindigkeit und hoher Luftmenge aus den Einblasschlitzen 29 gearbeitet werden, so dass auch Druckstösse am Ausgang des Düsenspaltes 10 vermieden werden, die wiederum Perlenbildung begünstigen würden.

In dem aus dem Düsenspalt 19 austretenden Strömungsbündel 31 liegen somit Fasern grossen Durchmessers von gegebenenfalls mehr als 10 µm und grosser Länge bei minimaler Perlenbildung vor, wobei der Ausstoss im Hinblick auf die trotz niedriger Viskosität hohe Auslaufmenge infolge der grossen Bemessung der Austrittsöffnungen 6 durchaus befriedigend ist.

## Patentansprüche

1. Verfahren zur Herstellung von Mineralfasern mit einer grossen Faserdicke von gegebenenfalls mehr als 10 µm aus silikatischen Rohstoffen, insbesondere Basalt, nach dem Düsenblasverfahren in einer Blasdüseneinrichtung (8), in deren Düsenspalt (10) ein Treibgas injiziert wird, wobei aus einer Verteilerwanne (5) austretende Primärfäden in den Düsenspalt (10) eintreten, dort der Wirkung des Treibgases ausgesetzt und zu Einzelfasern ausgezogen werden, dadurch gekennzeichnet, dass ein Rohstoff mit einem molaren Viskositätsmodul von mindestens 1,5 gewählt wird, dass der Austrittsquerschnitt jedes Primärfadens aus der Verteilerwanne (5) zwischen 1,5 mm² und 3,5 mm² insbesondere bei etwa 3,1 mm² gewählt wird, dass man den Primärfaden, gemessen von seinem Austritt aus der Verteilerwanne (5), eine Strecke von 8 mm bis 15 mm, insbesondere von etwa 11 mm zurücklegen lässt, bevor er die Ebene der Treibgasinjektion erreicht, und dass die Schmelze während des Ausziehvorganges in dem Düsenspalt (10) mit einer horizontalen Breite (hB) zwischen 6 mm und 15 mm, insbesondere von etwa 12 mm und einer unterhalb der Ebene der Treibgasinjektion gemessenen vertikalen Länge (vL) zwischen 5 mm und 80 mm, insbesondere von etwa 40 mm geführt wird.

2. Einrichtung zur Durchführung des Verfahrens gemäss Anspruch 1, mit einer Schmelzwanne und wenigstens einer daraus gespeisten Verteilerwanne (5) mit Austrittsöffnungen (6) für Primärfäden aus Schmelze (1), mit einer unterhalb der Austrittsöffnungen (6) mit Abstand hiervon symmetrisch zur Fallinie (11) der Primärfäden angeordneten Blasdüseneinrichtung (8), mit einem unterhalb der Blasdüseneinrichtung (8) angeordneten Fallschacht (16) und mit einem am unteren Ende des Fallschachtes (16) angeordneten Förderband (3) zur Ablage und Wegförderung der erzeugten Mineralfasern als kontinuierliche Bahn (2), wobei die Blasdüseneinrichtung (8) aus zwei Blasdüsenhälften (9) besteht, die einen dazwischenliegenden, eine Vielzahl von parallel nebeneinander einlaufenden Primärfäden aufnehmenden Düsenspalt (10) begrenzen und je einen nach unten in den Düsenspalt (10) gerichteten Einblasschlitz (29) für Treibgas aufweisen der auf gleicher Höhe mit dem gegenüberliegenden Einblasschlitz (29) der anderen Blasdüsenhälfte (9) angeordnet ist, dadurch gekennzeichnet, dass die Austrittsöffnungen (6) der Verteilerwanne (5) je einen Austrittsquerschnitt zwischen 1,5 mm² und 3,5 mm² insbesondere von etwa 3,1 mm² aufweisen, dass der Vertikalabstand (vA) zwischen den Austrittsöffnungen (6) der Verteilerwanne (5) und den Einblasschlitzen (29) für Treibgas zwischen 8 mm und 15 mm, insbesondere bei 11 mm liegt, dass die horizontale Breite (hB) des Düsenspaltes (10) zwischen 6 mm und 15 mm, insbesondere bei 12 mm liegt, und dass die vertikale Länge (vL) des Düsenspaltes (10) unterhalb der Einblasschlitze (29) zwischen 5 mm und 80 mm, insbesondere bei 40 mm liegt.

3. Einrichtung nach Anspruch 2, dadurch gekennzeichnet, dass die Einblasschlitze (29) zur Mitte des Düsenspaltes (10) hin durch je eine Luftleitlippe abgedeckt sind, welche um wenigstens 0,5 mm, insbesondere um mehr als 1 mm im Sinne einer lokalen Verminderung der Breite (hB) des Düsenspaltes (10) in diesen hinein vorsteht.

**Revendications**

1. Procédé pour la fabrication de fibres minérales ayant une forte épaisseur supérieure à éventuellement 10 µm, à partir de matières brutes siliceuses, notamment de basalte, selon le procédé de soufflage à filière dans une dispositif à filière de soufflage (8), un gaz d'entraînement étant injecté dans l'interstice (10) de la filière, et la fibre primaire sortant d'une cuve distributrice (5) pénétrant dans l'interstice (10) de la filière et y étant soumise à l'effet du gaz d'entraînement et étant étirée en fibres individuelles, caractérisé en ce que: on choisit une matière brute ayant un module de viscosité molaire d'au moins 1,5, la section de sortie de chaque fibre primaire à partir de la cuve distributrice (5) est choisie entre 1,5 mm² et 3,5 mm², et notamment à 3,1 mm², on laisse parcourir par la fibre primaire, mesuré à partir de sa sortie de la cuve distributrice (5), une distance de 8 mm à 15 mm, et notamment d'environ 11 mm, avant d'atteindre le plan de l'injection du gaz d'entraînement, et la masse fondue est dirigée pendant le processus d'étirage dans l'interstice (10) de la filière sur une largeur horizontale (hB) comprise entre 6 mm et 15 mm, et notamment d'environ 12 mm, et une longueur verticale (vL) mesurée au-dessous du plan de l'injection du gaz d'entraînement comprise entre 5 mm et 80 mm, et notamment d'environ 40 mm.

2. Dispositif pour la mise en œuvre du procédé selon la revendication 1, comprenant une cuve à masse fondue et au moins une cuve distributrice (5) alimentée au-dessous, comprenant des ouvertures de sortie (6) pour les fibres primaires provenant de la masse fondue (1), avec un dispositif à filières de soufflage (8) disposé au-dessous des ouvertures de sortie (6) à une certaine distance de ces dernières et symétriquement à la ligne de chute (11) des fibres primaires, une colonne de chute (16) disposée au-dessous du dispositif à filières de soufflage (8) et une bande transporteuse (3) montée à l'extrémité inférieure de la colonne de chute (16) la dépôt et l'évacuation des fibres minérales fabriquées sous forme d'une bande continue (2), le dispositif à filières de soufflage (8) étant constitué par deux moitiés de filière (9), qui limitent entre elles un interstice (10) qui reçoit une pluralité de fibres primaires parvenant en parallèle les unes contre les autres et comprenant chacun une fente d'injection (29) dirigée vers le bas dans l'interstice (10) et destiné au gaz d'entraînement, fente qui est disposée à la même hauteur que la fente d'injection (29) située en face de l'autre moitié de filière (9), caractérisé en ce que: las ouvertures de sortie (6) de la cuve distributrice (5) présentent chacune une section de sortie comprise entre 1,5 mm² et 3,5 mm², et notamment d'environ 3,1 mm², et en ce que la distance verticale (vA) entre les ouvertures de sortie (6) de la cuve distributrice (5) et les fentes d'injection (29) du gaz d'entraînement est comprise entre 8 et 15 mm, et notamment de 11 mm, et en ce que la largeur horizontale (hB) de l'interstice (10) de la filière est compris entre 6 mm et 15 mm, et est notamment de 12 mm, et en ce que la longueur verticale (vL) de l'interstice (10) de la filière au-dessous des fentes d'injection (29) est comprise entre 5 mm et 80 mm, est est notamment de 40 mm.

3. Dispositif selon la revendication 2, caractérisé en ce que les fentes d'injection (29) sont chacune recouvertes en direction du centre de l'interstice (10) de la filière par une lèvre dèflectrice d'air qui saillie dans celle-ci sur au moins 0,5 mm, et notamment sur plus de 1 mm, en vue de diminuer localemant la largeur (hB) de l'interstice (10) de la filière.

## Claims

1. A process for producing mineral fibres with large fibre thickness possibly exceeding 10 µm from silicate raw materials, in particular basalt, by blast drawing in a blast nozzle unit (8) in the nozzle slot (10) of which a propellant gas is injected wherein primary filaments coming out of a distributor tank (5) are fed into the nozzle slot (10), there being exposed to the propellant gas and being drawn to monofilaments, characterized by selecting a raw material having a molar moduls of viscosity of at least 1.5, selecting the exit cross-section of each primary filamant out of the distributor tank (5) between 1.5 mm² and 3.5 mm², in particular at about 3.1 mm², passing the primary filament a distance of 8 mm to 15 mm, in particular of about 11 mm, measured of its exit out of the distributor tank (5), before reaching the level of injection of propellant gas, and leading the melt during drawing action in the nozzle slot (10) with the horizontal width (hB) between 6 mm and 15 mm, in particular of about 12 mm and a vertical length (vL) between 5 mm and 80 mm, in particular of about 40 mm, measured below the level of injection of propellant gas.

2. An apparatus for realization of the process according to claim 1, comprising a melt tank and at least one distributor tank (5) fed therefrom, having exit orifices (6) for primary filaments of melt (1), a blast nozzle unit (8) arranged underneath the exit orifices (6) at a distance therefrom symmetrically relative to the plumb line (11) of the primary filaments, a chute (16) arranged underneath the blast nozzle unit (8), and conveyor belt (3) arranged at the lower end of the chute (16) and on which the mineral fibres produced are laid and transported away in the form of a continuous web (2), wherein the blast nozzle unit (8) consists of two blast nozzle halves (9) which bound a nozzle slot (10) in between which accommodates a plurality of parallel incoming primary filaments and each has a blow-in slit (29) which points downward into the nozzle slot (10), which is intended for propellant gas and which is arranged at the same level as the opposite blow-in slit (29) in the other blast nozzle half (9), characterized in that the exit orifices (6) in the distributor tank (5) each have an exit cross-section between 1.5 mm² and 3.5 mm², in particular about 3.1 mm², the vertical distance (vA) between the exit orifices (6) of the distributor tank (5) and the blow-in slits (29) for propellant gas is between 8 mm and 15 mm, in particular 11 mm, the horizontal width (hB) of the nozzle slot (10) is between 6 mm and 15 mm, in particular 12 mm, and the vertical length (vL) of the nozzle slot (10) below the blow-in slits (29) is between 5 mm and 80 mm, in particular 40 mm.

3. Apparatus according to claim 2, characterized in that the blow-in slits (29) are each covered up towards the middle of the nozzle slot (10) by an air guide lip which projects therein to by at least 0.5 mm, in particular by more than 1 mm, in the sense of a local reduction of the width (hB) of the nozzle slot (10).

## FIG.1

## FIG.2

# FIG. 3